# EUROPEAN PATENT APPLICATION

(11) **EP 4 242 880 A1**
(43) Date of publication of application: **13.09.2023**
(21) Application number: 21893890.0
(22) Date of filing: 16.11.2021
(51) Int. Cl.: G06F 17/15

(54) **OPERATOR CALCULATION METHOD AND APPARATUS, DEVICE, AND SYSTEM**

(30) Priority: 19.11.2020 CN 202011301935
(71) Applicant: Huawei Technologies Co., Ltd., Shenzhen, Guangdong 518129 (CN)
(72) Inventor: BAO, Xu, Shenzhen, Guangdong 518129 (CN)
(74) Representative: Gill Jennings & Every LLP
(86) International application number: PCT/CN2021/130883
(87) International publication number: WO 2022/105743

(57) **Abstract**

An operator calculation method, apparatus, device, and system in the field of artificial intelligence are disclosed. The method includes: obtaining parameter data of a first data shape of an AI network, where the first data shape is a data length in each dimension that is supported by the AI network for processing, the parameter data includes combination information of at least two calculating units, data that is supported for processing by each calculating unit is data having a second data shape, and a data length in any dimension obtained after the second data shape of each calculating unit is combined based on the combination information is greater than or equal to a data length of the first data shape in a same dimension (S171); and invoking the at least two calculating units to perform calculation on first target data having the first data shape (S172). Therefore, in this method, the at least two calculating units are combined to support a change of a data shape in any range, to implement a function of an AI dynamic-shape operator, and improve a startup speed of the AI network.

## Description

This application claims priority to Chinese Patent Application No. 2020113019355, filed with the China National Intellectual Property Administration on November 19, 2020 and entitled "OPERATOR CALCULATION METHOD, APPARATUS, DEVICE, AND SYSTEM", which is incorporated herein by reference in its entirety.

### TECHNICAL FIELD

This application relates to the field of computer technologies, and in particular, to an operator calculation method, apparatus, device, and system.

### BACKGROUND

AI (Artificial Intelligence, artificial intelligence) is a theory, a method, a technology, and an application system that simulate, extend, and expand human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a manner similar to human intelligence. Artificial intelligence is to research design principles and implementations of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

Currently, with continuous development of computer technologies, an AI network is also widely used. In addition, the AI network is increasingly complex, and there are more types of AI operators in the AI network. Even for AI operators of a same type, there are increasing data shapes of data that needs to be supported for processing. For each of the different data shapes, an AI operator needs to be recompiled. Consequently, compilation is increasingly time-consuming, and a startup speed of the AI network is reduced.

### SUMMARY

Embodiments of this application provide an operator calculation method, apparatus, device, and system. At least two calculating units are combined to support a change of a data shape in any range, to implement a function of an AI dynamic-shape operator, and improve a startup speed of an AI network.

According to a first aspect, an embodiment of this application provides an operator calculation method, and the method includes:
obtaining parameter data of a first data shape of an AI network, where the first data shape is a data length in each dimension that is supported by the AI network for processing, the parameter data includes combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension; and
invoking the at least two calculating units to perform calculation on first target data having the first data shape.

In other words, for the first data shape that is supported by the AI network for processing, the operator is not recompiled, but the parameter data of the first data shape is obtained. The parameter data includes the combination information of the at least two calculating units, and the calculating units are invoked to calculate the first target data having the first data shape, to avoid that an AI operator needs to be recompiled for each different first data shape, and support a change of a data shape in any range by combining the at least two calculating units. This implements a function of an AI dynamic-shape operator, and improves a startup speed of the AI network.

There may be one or more first data shapes in the method. Because the first data shape actually is an attribute of an operator, that is, a data length in each dimension that is supported by each of one or more operators for processing in the AI network, there may be one or more first data shapes. A plurality of operators herein may be operators of a same type, or may be operators of different types. For the operators of a same type, if data shapes that are supported by the operators for processing are different, there may be a plurality of first data shapes. For the operators of different types, there may also be a plurality of first data shapes because the operator types are different.

The second data shape is a data length in each dimension that is supported by the calculating unit for processing.

A relationship between the second data shape and the first data shape is that a data length in any dimension obtained after the second data shape of each calculating unit is combined based on the combination information is greater than or equal to a data length of the first data shape in a same dimension.

For example, the second data shape includes three dimensions: a length, a width, and a height. A data length in the dimension of the length obtained after the second data shape of each calculating unit is combined based on the combination information is greater than or equal to a data length of the first data shape in the dimension of the length, a data length in the dimension of the width obtained after the second data shape of each calculating unit is combined based on the combination information is greater than or equal to a data length of the first data shape in the dimension of the width, and a data length in the dimension of the height obtained after the second data shape of each calculating unit is combined based on the combination information is greater than or equal to a data length of the first data shape in the dimension of the height. The calculating unit in the method may be equivalent to an operator. The calculating unit may be an operator of the AI network, or may be a component of an operator. The combination information in the method may include a combination mode of the at least two calculating units. For example, a data length of the first data shape in a dimension is 11, and a combination mode of the at least two calculating units in the combination information may be a calculating unit whose data length is 5 + a calculating unit whose data length is 5 + a calculating unit whose data length is 5; or may be a calculating unit whose data length is 5 + a calculating unit whose data length is 5 + a calculating unit whose data length is 1.

The parameter data in this method may be stored in a buffer in a form of a parameter table.

In a possible implementation, the at least two calculating units include same calculating units, or different calculating units, or same calculating units and different calculating units.

Second data shapes of the same calculating units have a same data length in each dimension, and second data shapes of the different calculating units have different data lengths in at least one dimension.

In other words, in this implementation, the same calculating units and the different calculating units may be determined by whether data lengths in each dimension are the same.

In a possible implementation, the at least two calculating units each are a calculating unit of the AI network.

In other words, in this implementation, the at least two calculating units of the AI network may be invoked to calculate the first target data having the first data shape that is supported by the AI network for processing.

The at least two calculating units in this manner may be calculating units of the AI network, or may be calculating units of another network other than the AI network. The AI network and the another network herein may be used to implement different functions, for example, functions such as target detection, image classification, audio processing, and natural language processing.

The AI network and the another network that are used to implement different functions may include same calculating units. For example, the AI network and the another network each include a convolution calculating unit. Alternatively, the AI network and the another network that are used to implement different functions may include different calculating units. The AI network does not include a convolution calculating unit, and the another network includes a convolution operator unit. For example, if the AI network does not include a convolution calculating unit, but the another network includes a convolution operator unit, when the AI network needs to use the convolution calculating unit, the convolution operator unit included in the another network may be used.

In a possible implementation, the combination information includes a combination mode of the at least two calculating units.

A data length in any dimension obtained after the second data shape of each calculating unit is combined based on the combination mode is greater than or equal to a data length of the first data shape in a same dimension.

In other words, in this implementation, a relationship between the second data shape and the first data shape is that a data length in any dimension obtained after the second data shape of each calculating unit is combined based on a specific combination mode is greater than or equal to a data length of the first data shape in a same dimension.

In a possible implementation, the parameter data further includes identification information for a specified calculating unit.

The specified calculating unit is a calculating unit, in the at least two calculating units, whose data that needs to be processed is data having a third data shape. A data length of the third data shape in at least one dimension is less than a data length of the second data shape that is supported by the specified calculating unit for processing and that is in the same dimension.

In other words, in this implementation, for the specified calculating unit that needs to process the data having the third data shape, the identification information may be added to the parameter data for the specified calculating unit, so that the specified calculating unit is subsequently invoked to perform calculation on the data having the third data shape. This improves accuracy of operator calculation.

In a possible implementation, the parameter data further includes a specified processing manner of the specified calculating unit for the data having the third data shape.

In other words, in this implementation, for the specified calculating unit that needs to process the data having the third data shape, the specified processing manner may be further added to the parameter data for the specified calculating unit, so that the specified calculating unit is subsequently invoked to perform calculation on the data having the third data shape in the specified processing manner.

In a possible implementation, the specified processing manner includes:
discarding invalid data, where the invalid data is data other than the data having the third data shape in the second data shape that is supported by the specified calculating unit for processing; and
performing data overlapping, where the performing data overlapping is overlapping the invalid data with data that needs to be processed by another calculating unit.

In other words, in this implementation, the specified processing manner may be discarding the invalid data, or may be overlapping the data, so that calculation is subsequently performed on the data having the third data shape in the specified processing manner. This enriches implementations of operator calculation, and improves reliability of operator calculation.

In a possible implementation, the parameter data further includes a specified change range of the third data shape in each dimension that is supported by the specified calculating unit.

In other words, in this implementation, because the second data shape that is supported by the specified calculating unit for processing is unchanged, and the third data shape that needs to be processed by the specified calculating unit may be changed, but the change has a change range, the specified change range of the third data shape in each dimension may be added to the parameter data, so that same calculating units can support a change of a data shape in a change range.

In a possible implementation, the specified change range is a data length of the second data shape that is supported by the specified calculating unit for processing and that is in each dimension, or a specified part length of the data length of the second data shape in each dimension.

In other words, in this implementation, different change ranges may be selected based on an actual situation. If a data length of data in each dimension is small, the change may occur in the entire data length. For example, if the data length is 16, the change may range from 0 to 16. If a data length of data in each dimension is large, the change may occur in a small range at the tail of the data length. For example, if the data length is 100, the change may range from 90 to 100. This can ensure efficiency of operator calculation, and avoid a large amount of repeated calculation.

In a possible implementation, the parameter data includes rank parameter data, and the rank parameter data is used for supporting a data shape in a specified change range.

In other words, in this implementation, parameter data of different first data shapes may be the same, that is, the rank parameter data. In this way, it is unnecessary that each different data shape corresponds to different parameter data. Therefore, an amount of parameter data in the buffer is effectively reduced, and a waste of resources is avoided.

In a possible implementation, the invoking the at least two calculating units to perform calculation on first target data having the first data shape includes:
obtaining the at least two calculating units from a calculating unit operator library; and
performing, by using the at least two calculating units, calculation on the first target data having the first data shape.

In other words, in this implementation, the calculating unit operator library may include a plurality of precompiled calculating units. During operator calculation, the calculating unit may be directly obtained from the calculating unit operator library. This improves efficiency of operator calculation, and also improves a startup speed of the AI network.

The calculating unit included in the calculating unit operator library may be configured to implement different operations, for example, convolution, addition, and matrix multiplication. These calculating units for implementing different operations may be used by a plurality of AI networks. The plurality of AI networks herein may be used to implement different functions, for example, functions such as target detection, image classification, audio processing, and natural language processing.

In a possible implementation, the invoking the at least two calculating units to perform calculation on first target data having the first data shape includes:
for any calculating unit, determining a target location, in the first target data, of second target data that needs to be processed by the any calculating unit;
obtaining, based on the target location, the second target data that needs to be processed by the any calculating unit from memory space storing the first target data; and
performing calculation on the second target data by using the any calculating unit.

In other words, in this implementation, when operator calculation is performed, the target location, in the first target data, of the second target data that needs to be processed may be first determined, the second target data is obtained from the memory space based on the target location, and calculation is performed on the second target data by using the calculating unit. This improves reliability of operator calculation.

The memory space in this manner may be storage space used for storing data in a memory, and an address of the memory space is one-dimensional. When the second target data is obtained from the memory space, because the second target data may be multi-dimensional, the second target data needs to be obtained from the memory space in a read-skipping and write-skipping manner, and after calculation is completed, output data obtained through calculation is stored in the memory space in the read-skipping and write-skipping manner.

It should be noted that, when the target location, in the first target data, of the second target data that needs to be processed is determined, if the parameter data includes location information of each second data shape in the first data shape, the target location of the second target data in the first target data may be determined based on the location information.

In a possible implementation, the target location includes: each dimension in which the second target data is located; and an offset and a data length of the second target data in any dimension.

In other words, in this implementation, because the second target data may be multi-dimensional, the target location needs to include each dimension in which the second target data is located, and the offset and the data length of the second target data in the any dimension. This improves accuracy and efficiency of obtaining the target data.

In a possible implementation, the at least two calculating units belong to different types of operators.

In other words, in this implementation, the at least two calculating units in the parameter data may belong to operators of a same type, that is, implement a same function; or may belong to operators of different types, that is, implement different functions, for example, a convolution operator, an add (add) operator, or a matmul (matrix multiplication) operator.

The different types of operators in this manner may be operators that are cascaded into a fusion operator. The fusion operator means different types of operators that are cascaded and are fused into one operator for one-time calculation. In this case, the at least two calculating units in the parameter data may be calculating units of these different types of operators, for example: a calculating unit of a conv operator, a calculating unit of a relu operator, a calculating unit of an abs operator, a calculating unit of an exp operator. In this way, during operator calculation, the calculating units of these different types of operators in the parameter data may be invoked to complete calculation of the fusion operator, to avoid invoking an operator of another type for calculation after an operator of one type completes calculation, and improve calculation efficiency of the fusion operator.

In a possible implementation, the calculating unit is a precompiled operator.

In other words, in this implementation, the calculating unit in the method may be equivalent to an operator, and is a precompiled operator. For example, the calculating unit operator library may include a plurality of precompiled calculating units. During operator calculation, the calculating unit may be directly obtained from the calculating unit operator library. This improves efficiency of operator calculation, and also improves a startup speed of the AI network.

In this manner, the precompiled operator may be a releasable static calculating unit binary package that is compiled by a compilation host, and all execution hosts only need to import the static calculating unit binary package. Alternatively, the execution host may precompile a plurality of calculating units, and store these precompiled calculating units in the buffer. In this way, when operator calculation is performed, the calculating unit may be directly obtained from the buffer. This also improves efficiency of operator calculation and also improves a startup speed of the AI network. It should be noted that static in the static calculating unit means that a data shape that is supported by the calculating unit for processing is unchanged. In this way, the precompiled calculating unit may be directly used for operator calculation without recompilation.

According to a second aspect, an embodiment of this application provides an operator calculation apparatus, and the apparatus includes:
an obtaining module, configured to obtain parameter data of a first data shape of an AI network, where the first data shape is a data length in each dimension that is supported by the AI network for processing, the parameter data includes combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension; and
a calculation module, configured to invoke the at least two calculating units to perform calculation on first target data having the first data shape.

In a possible implementation, the at least two calculating units include same calculating units, or different calculating units, or same calculating units and different calculating units.

Second data shapes of the same calculating units have a same data length in each dimension, and second data shapes of the different calculating units have different data lengths in at least one dimension.

In a possible implementation, the at least two calculating units each are a calculating unit of the AI network.

In a possible implementation, the combination information includes a combination mode of the at least two calculating units.

A data length in any dimension obtained after the second data shape of each calculating unit is combined based on the combination mode is greater than or equal to a data length of the first data shape in a same dimension.

In a possible implementation, the parameter data further includes identification information for a specified calculating unit.

The specified calculating unit is a calculating unit, in the at least two calculating units, whose data that needs to be processed is data having a third data shape. A data length of the third data shape in at least one dimension is less than a data length of the second data shape that is supported by the specified calculating unit for processing and that is in the same dimension.

In a possible implementation, the parameter data further includes a specified processing manner of the specified calculating unit for the data having the third data shape.

In a possible implementation, the specified processing manner includes:
discarding invalid data, where the invalid data is data other than the data having the third data shape in the second data shape that is supported by the specified calculating unit for processing; and
performing data overlapping, where the performing data overlapping is overlapping the invalid data with data that needs to be processed by another calculating unit.

In a possible implementation, the parameter data further includes a specified change range of the third data shape in each dimension that is supported by the specified calculating unit.

In a possible implementation, the specified change range is a data length of the second data shape that is supported by the specified calculating unit for processing and that is in each dimension, or a specified part length of the data length of the second data shape in each dimension.

In a possible implementation, the parameter data includes rank parameter data, and the rank parameter data is used for supporting a data shape in a specified change range.

In a possible implementation, the calculation module includes:
a first obtaining submodule, configured to obtain the at least two calculating units from a calculating unit operator library; and
a first calculation submodule, configured to perform, by using the at least two calculating units, calculation on the first target data having the first data shape.

In a possible implementation, the calculation module includes:
a determining submodule, configured to determine, for any calculating unit, a target location, in the first target data, of second target data that needs to be processed by the any calculating unit;
a second obtaining submodule, configured to obtain, based on the target location, the second target data that needs to be processed by the any calculating unit from memory space storing the first target data; and
a second calculation submodule, configured to perform calculation on the second target data by using the any calculating unit.

In a possible implementation, the target location includes: each dimension in which the second target data is located; and an offset and a data length of the second target data in any dimension.

In a possible implementation, the at least two calculating units belong to different types of operators.

In a possible implementation, the calculating unit is a precompiled operator.

According to a third aspect, an embodiment of this application provides an operator calculation apparatus, including:
at least one memory, configured to store a program; and
at least one processor, configured to execute the program stored in the memory, where when the program stored in the memory is executed, the processor is configured to perform the method according to the first aspect.

According to a fourth aspect, an embodiment of this application provides an operator calculation device, including the apparatus provided in the second aspect or the third aspect.

According to a fifth aspect, an embodiment of this application provides an operator calculation system, including the operator calculation device provided in the fourth aspect and an operator compilation device, where
the operator calculation device includes the apparatus provided in the second aspect or the third aspect;
the operator compilation device is configured to compile a releasable calculating unit package; and
the operator calculation device is configured to import the calculating unit package.

According to a sixth aspect, an embodiment of this application provides a computer storage medium. The computer storage medium stores instructions, and when the instructions are run on a computer, the computer is enabled to perform the method provided in the first aspect.

According to a seventh aspect, an embodiment of this application provides a computer program product including instructions. When the instructions are run on a computer, the computer is enabled to perform the method provided in the first aspect.

According to an eighth aspect, an embodiment of this application provides a chip, including at least one processor and an interface, where
the interface is configured to provide program instructions or data for the at least one processor; and
the at least one processor is configured to execute the program instructions, to implement the method provided in the first aspect.

This application discloses an operator calculation method, apparatus, device, and system. The method includes: obtaining parameter data of a first data shape of an AI network, where the first data shape is a data length in each dimension that is supported by the AI network for processing, the parameter data includes combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension; and invoking the at least two calculating units to perform calculation on first target data having the first data shape. In this way, the at least two calculating units are combined to support a change of a data shape in any range, to implement a function of an AI dynamic-shape operator, and improve a startup speed of the AI network.

### BRIEF DESCRIPTION OF DRAWINGS

FIG. 1 is a schematic diagram of an artificial intelligence main framework;
FIG. 2 is a schematic diagram of an architecture of an operator calculation system;
FIG. 3 is a schematic diagram of a change of a data shape;
FIG. 4 is a schematic diagram of an operator calculation process;
FIG. 5 is a schematic diagram of an architecture of an operator calculation system;
FIG. 6 is a diagram of a structure of components of a terminal device;
FIG. 7 is a diagram of a structure of hardware of an AI chip;
FIG. 8 is a schematic diagram of a read-skipping and write-skipping scenario used in an operator calculation process;
FIG. 9 is a schematic diagram of a read-skipping and write-skipping support manner;
FIG. 10 is a schematic diagram of a tail data processing manner;
FIG. 11 is a schematic diagram of a structure of a parameter table;
FIG. 12 is a schematic diagram of an application scenario of a rank data table;
FIG. 13 is a schematic diagram of a fusion operator;
FIG. 14 is a schematic diagram of an operator calculation process;
FIG. 15 is a schematic diagram of an operator calculation process;
FIG. 16 is a schematic diagram of an operator calculation process;
FIG. 17 is a schematic flowchart of an operator calculation method according to an embodiment of this application;
FIG. 18 is a schematic diagram of a structure of an operator calculation apparatus according to an embodiment of this application;
FIG. 19 is a schematic diagram of a structure of an operator calculation apparatus according to an embodiment of this application; and
FIG. 20 is a schematic diagram of a structure of a chip according to an embodiment of this application.

### DESCRIPTION OF EMBODIMENTS

To make objectives, technical solutions, and advantages of embodiments of this application clearer, the following describes the technical solutions of embodiments of this application with reference to the accompanying drawings.

In descriptions of embodiments of this application, the word such as "example", "for example", or "in an example" is used to represent giving an example, an illustration, or a description. Any embodiment or design scheme described as "example", "for example", or "in an example" in embodiments of this application should not be explained as being more preferred or having more advantages than another embodiment or design scheme. Exactly, use of the word "example", "for example", or "in an example" is intended to present a related concept in a specific manner.

In description of embodiments of this application, the term "and/or" is merely an association relationship for describing associated objects, and indicates that three relationships may exist. For example, A and/or B may indicate the following three cases: Only A exists, only B exists, and both A and B exist. In addition, unless otherwise specified, the term "a plurality of" means two or more than two. For example, a plurality of systems are two or more systems, and a plurality of screen terminals refer to two or more screen terminals.

Moreover, the terms "first" and "second" are merely intended for a purpose of description, and shall not be understood as an indication or implication of relative importance or implicit indication of an indicated technical feature. Therefore, a feature limited by "first" or "second" may explicitly or implicitly include one or more features. The terms "comprise", "include", "have", and other variants thereof all mean "include but is not limited to", unless otherwise specifically emphasized in another manner.

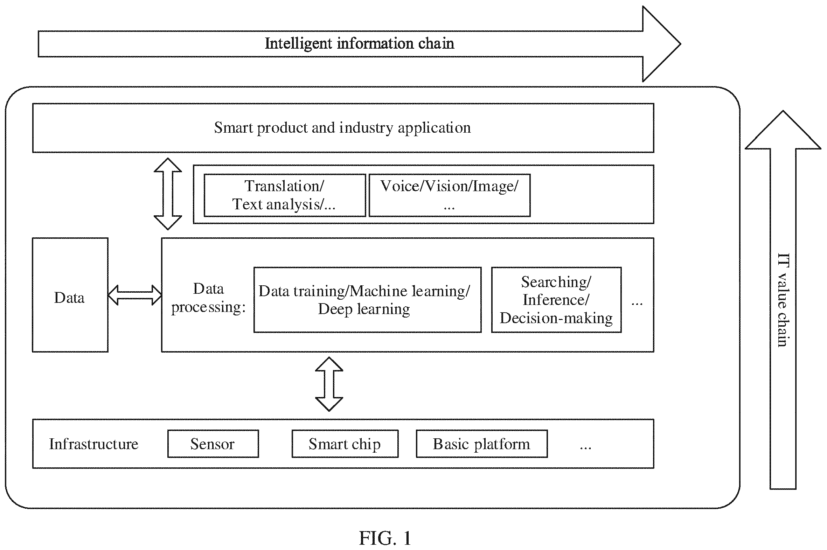

FIG. 1 is a schematic diagram of an artificial intelligence main framework. The main framework describes an overall working procedure of an artificial intelligence system, and is applicable to a requirement of a general artificial intelligence field.

The following describes the artificial intelligence main framework from two dimensions: an "intelligent information chain" (a horizontal axis) and an "IT value chain" (a vertical axis).

The "intelligent information chain" reflects a series of processes from obtaining data to processing the data. In an example, the process may be a general process of intelligent information perception, intelligent information representation and formation, intelligent inference, intelligent decision-making, and intelligent execution and output. In this process, the data undergoes a refinement process of "data-information-knowledge-intelligence".

The "IT value chain" reflects a value brought by artificial intelligence to the information technology industry from an underlying infrastructure and information (technology providing and processing implementation) of human intelligence to an industrial ecological process of a system.

### (1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

### (2) Data

Data at an upper layer of the infrastructure indicates a data source in the field of artificial intelligence. The data relates to a graph, an image, speech, and text, further relates to internet of things data of a conventional device, and includes service data of an existing system and perception data such as force, displacement, a liquid level, a temperature, and humidity.

### (3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

### (4) General capability

After data processing mentioned above is performed on data, some general capabilities may further be formed based on a data processing result, for example, an algorithm or a general system, such as translation, text analysis, computer vision processing, speech recognition, and image recognition.

### (5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

It should be noted that operator calculation in this application is in the data processing phase in (3).

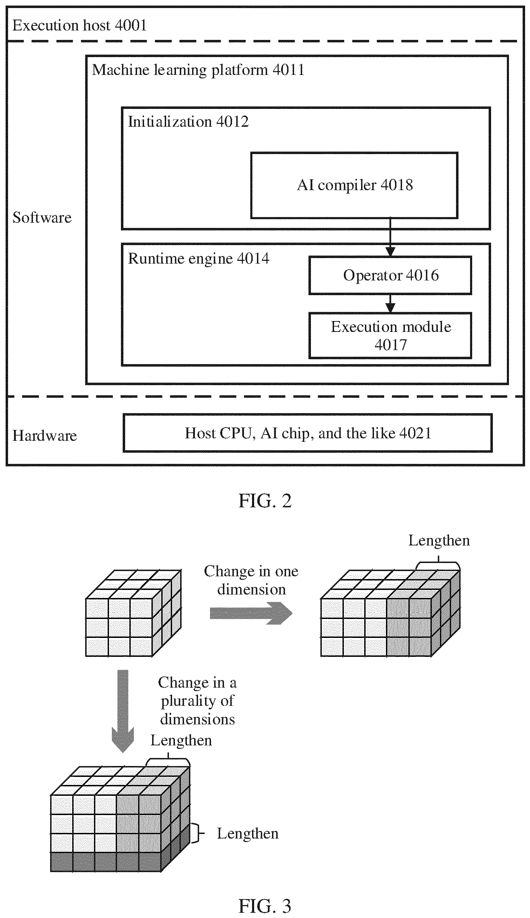

FIG. 2 is a schematic diagram of an architecture of an operator calculation system. As shown in FIG. 2, in an initialization 4012 phase of an AI network, a machine learning platform 4011 may parse out all AI operators in the AI network and data shapes that need to be supported by each AI operator for processing, and complete operator compilation by using an AI compiler 4018. In an execution phase (that is, a runtime engine 4014) of the AI network, an operator 4016 may be invoked, and operator calculation (that is, an execution module 4017) is performed. The AI operator may be a unit module that implements specific calculation in the AI network. For example, the AI operator may be a convolution operator, an add (add) operator, and a matmul (matrix multiplication) operator.

It can be learned that a more complex AI network indicates that there are more types of AI operators in the AI network. Even for AI operators of a same type, there are increasing data shapes of data that needs to be supported for processing. For each different data shape, an AI operator needs to be recompiled. Consequently, compilation is increasingly time-consuming, and a startup speed of the AI network is reduced.

It should be noted that the data shape (shape) in this application is a data length of data calculated by an operator in each dimension. The data shape may change in one dimension, or may change in multiple dimensions at the same time. As shown in FIG. 3, the graph data may change in a dimension of a length, or may change in two dimensions of a length and a width.

To resolve the foregoing technical problem, this application provides an operator calculation method, apparatus, device, and system, to implement a function of an AI dynamic-shape operator by combining binary static calculating units. This can support a change of a data shape in any range, and improve a startup speed of the AI network.

It should be noted that "static" in the static calculating unit in this application means that a data shape that is supported by the calculating unit for processing is unchanged. In this way, the precompiled static calculating unit may be directly used for operator calculation without recompilation.

A parameter table in this application is parameter data that is used for describing, in a form of a table, a first data shape supported by the AI network. The parameter data includes combination information of at least two calculating units, and data that is supported by each calculating unit for processing is data having a second data shape.

The following uses specific embodiments for description.

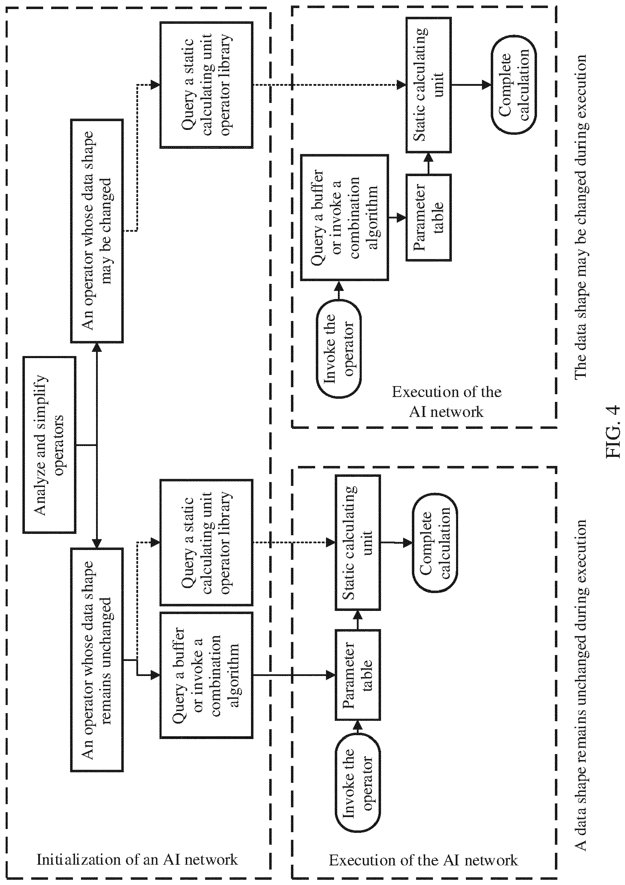

FIG. 4 is a schematic diagram of an operator calculation process. As shown in FIG. 4, operator calculation may be used in an AI network, and there are many operators in the AI network. For example, the operator may be a convolution operator, an add (add) operator, and a matmul (matrix multiplication) operator. During initialization of the AI network, the operator is analyzed and the network is simplified to obtain a required operator type. For an AI network whose data shape may be changed during execution, data shapes that need to be supported by a part of operators for processing may be changed. There are two scenarios are included in Figure 4: "The data shape remains unchanged during execution" on the left and "the data shape may be changed during execution" on the right. For an AI network whose data shape remains unchanged during execution, only the scenario in which "the data shape remains unchanged during execution" on the left in FIG. 4 is included. A static calculating unit in FIG. 4 may be stored in a static calculating unit operator library in advance, and may be extracted from the static calculating unit operator library for use when the static calculating unit is invoked to complete calculation. Meanings of parts in FIG. 4 are specifically as follows.

A static calculating unit is an operator unit that performs calculation only on an unchanged data shape. The operator unit is also equivalent to an operator. Each type of operator may include several static calculating units of different data shapes after optimization. Different types of operators may implement different functions, for example, a convolution operator, an add (add) operator, or a matmul (matrix multiplication) operator.

A parameter table is a data structure used for describing a combination mode of static calculating units. Each static calculating unit completes calculation of a block of data. After a plurality of static calculating units are combined based on parameters in the parameter table, calculation of all data can be completed.

Initialization of the AI network is a phase of initialization operations such as analyzing an operator type of the AI network.

Initial execution of the AI network is a process of invoking an operator and completing calculation. Operator calculation may be completed by combining a parameter table and a static calculating unit, and the parameter table is used as an input parameter of the static calculating unit.

The scenario in which the data shape remains unchanged during execution: For an operator whose data shape remains unchanged, a parameter table can be generated during initialization of the AI network and stored in a buffer. The parameter table can be directly obtained from the buffer during execution of the AI network.

The scenario in which the data shape may be changed during execution: For an operator whose data shape may be changed, a parameter table can be generated during execution the AI network, and then a static calculating unit is invoked to complete calculation based on the parameter table. If a buffer mechanism is used, the parameter table can be obtained from the buffer when the parameter table is used, and the parameter table does not need to be regenerated each time the parameter table is used.

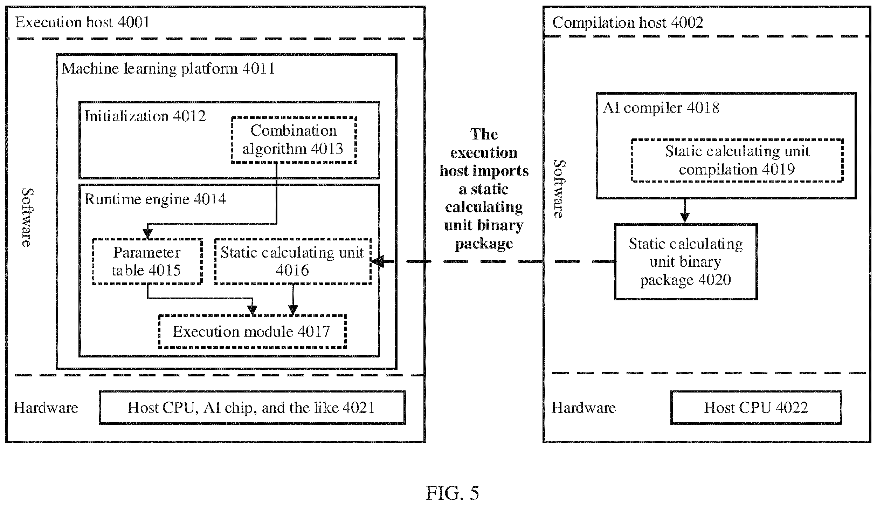

FIG. 5 is a schematic diagram of an architecture of an operator calculation system. A product implementation form in this application is program code included in an AI compiler and machine learning/deep learning platform software, and deployed on host hardware. An application scenario shown in FIG. 5 is used as an example. The program code in this application is stored in a static calculating unit compilation module of the AI compiler, in an initialization module of a platform software, and in a runtime engine. During compilation, the program code in this application is run in a CPU of a compilation host. During running, a static calculating unit 4016 in this application is run in an AI chip of an execution host. The AI chip may be equipped with a binary static calculating unit and a software program in an operator calculation process provided in this application. FIG. 5 shows an implementation form of this application in the host AI compiler and the platform software. Parts 4013, 4015, 4016, 4017, and 4019 shown in dashed boxes are modules newly added based on existing platform software in this application. In an initialization module 4012, a combination algorithm module 4013 is designed in this application. In a runtime engine 4013, an execution module 4017 may complete operator calculation based on a parameter table 4015 and the invoked static calculating unit 4016. An AI compiler 4018 includes a static calculating unit compilation module 4019. After completing static calculating unit compilation, the static calculating unit compilation module 4019 may obtain a static calculating unit binary package 4020.

In addition, FIG. 5 shows a typical application scenario of binary release of the static calculating unit. In this scenario, a compilation host 4002 and the execution host 4001 are separated. Before a software version is released, the compilation host 4002 compiles a releasable static calculating unit binary package 4020, and all execution hosts 4001 only need to import the static calculating unit binary package 4020.

However, in another application scenario, a machine learning platform 4011 includes the AI compiler 4018, and the static calculating unit is compiled on the execution host 4001. In other words, a function of the compilation host 4002 is implemented on the execution host 4001. In this application scenario, the static calculating unit 4016 performs compilation during initialization 4012.

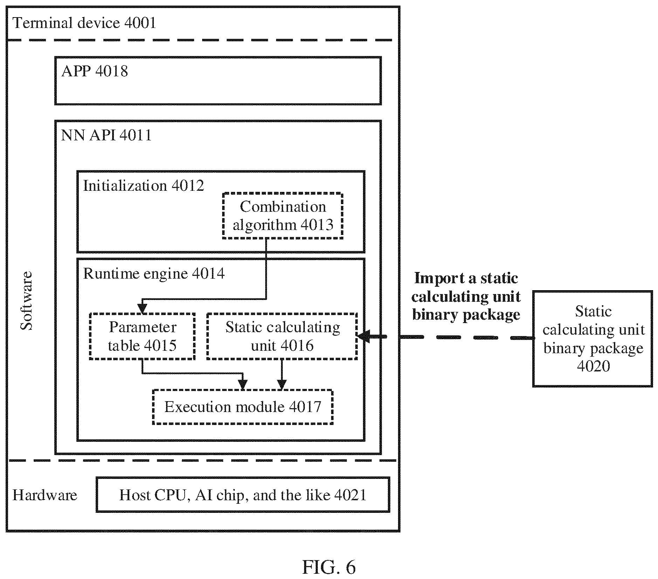

FIG. 6 is a diagram of a structure of components of a terminal device. As shown in FIG. 6, a static calculating unit in binary release is used on the terminal device, and an AI network execution capability is provided for all apps on the terminal device through a universal interface NNAPI (Neural Networks Application Programming Interface, neural network application programming interface) 4011. A static calculating unit 4016 in this application uses an operator package 4020 in binary release, and does not need to be recompiled. During initialization 4012, only a combination algorithm 4013 needs to be invoked to generate a parameter table 4015 of a data shape corresponding to an operator. In this embodiment, when an app (application) is started, a startup time of an AI network can be minimized, to greatly improve user experience. The static calculating unit 4016 in this application may be run in an AI chip of the terminal device. The AI chip may be equipped with a binary static calculating unit and a software program in an operator calculation process provided in this application.

It should be noted that, the terminal device may implement decoupling between shape information of data and operator code by using a released static calculating unit binary package, to reduce difficulty in operator development and optimization. For example, in application scenarios such as a mobile phone, a tablet computer, and a smart TV, use of the released static calculating unit binary package can greatly improve an initialization speed of the AI network in the app.

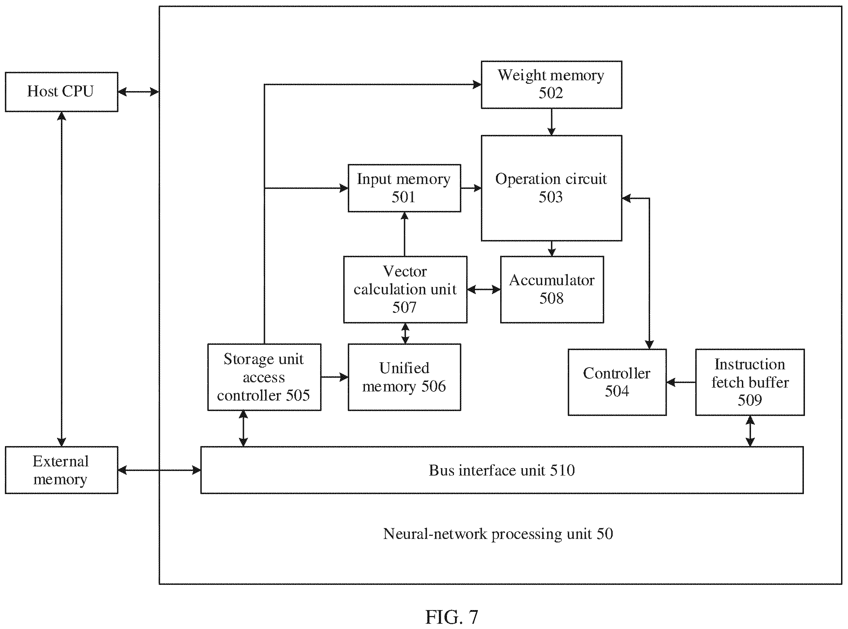

FIG. 7 is a diagram of a structure of hardware of an AI chip. The AI chip may be equipped with a binary static calculating unit and a software program in an operator calculation process provided in this application. A neural-network processing unit (Neural network processor, NPU) NPU 50 is mounted on a host CPU (Host CPU) as a coprocessor, and the host CPU allocates a task. A core part of the NPU is an operation circuit 50. The operation circuit 503 is controlled by a controller 504 to extract matrix data in a memory and perform a multiplication operation.

In some implementations, the operation circuit 503 includes a plurality of processing engines (Process Engine, PE) inside. In some implementations, the operation circuit 503 is a two-dimensional systolic array. The operation circuit 503 may alternatively be a one-dimensional systolic array or another electronic circuit that can perform mathematical operations such as multiplication and addition. In some implementations, the operation circuit 503 is a general-purpose matrix processor.

For example, it is assumed that there is an input matrix A, a weight matrix B, and an output matrix C. The operation circuit fetches, from a weight memory 502, data corresponding to the matrix B, and buffers the data on each PE in the operation circuit. The operation circuit extracts data of the matrix A from an input memory 501, to perform a matrix operation on the matrix B, and a partial result or a final result of an obtained matrix is stored in an accumulator (accumulator) 508.

A unified memory 506 is configured to store input data and output data. Weight data is directly transferred to the weight memory 502 by using a storage unit access controller (Direct Memory Access Controller, DMAC) 505. The input data is also transferred to the unified memory 506 by using the DMAC.

A BIU is a bus interface unit, namely, a bus interface unit 510, and is configured to perform interaction between an AXI bus, and the DMAC and an instruction fetch buffer (Instruction Fetch Buffer) 509.

The bus interface unit (Bus Interface Unit, BIU for short) 510 is used by the instruction fetch buffer 509 to obtain instructions from an external memory, and is further used by the storage unit access controller 505 to obtain original data of the input matrix A or the weight matrix B from the external memory.

The DMAC is mainly configured to transfer input data in the external memory DDR to the unified memory 506, or transfer the weight data to the weight memory 502, or transfer the input data to the input memory 501.

A vector calculation unit 507 includes a plurality of operation processing units, and if necessary, performs further processing such as vector multiplication, vector addition, an exponential operation, a logarithmic operation, or value comparison on outputs of the operation circuit. The vector calculation unit 507 is mainly configured to perform network computing at a non-convolution/FC layer in a neural network, for example, pooling (pooling), batch normalization (batch normalization), or local response normalization (local response normalization).

In some implementations, the vector calculation unit 507 can store a processed output vector into the unified memory 506. For example, the vector calculation unit 507 may apply a non-linear function to the output of the operation circuit 503, for example, a vector of an accumulated value, to generate an activation value. In some implementations, the vector calculation unit 507 generates a normalized value, a combined value, or both a normalized value and a combined value. In some implementations, the processed output vector can be used as an activation input to the operation circuit 503, for example, to be used in a subsequent layer in the neural network.

The instruction fetch buffer (instruction fetch buffer) 509 connected to the controller 504 is configured to store instructions used by the controller 504.

The unified memory 506, the input memory 501, the weight memory 502, and the instruction fetch buffer 509 are all on-chip memories. The external memory is private for a hardware architecture of the NPU.

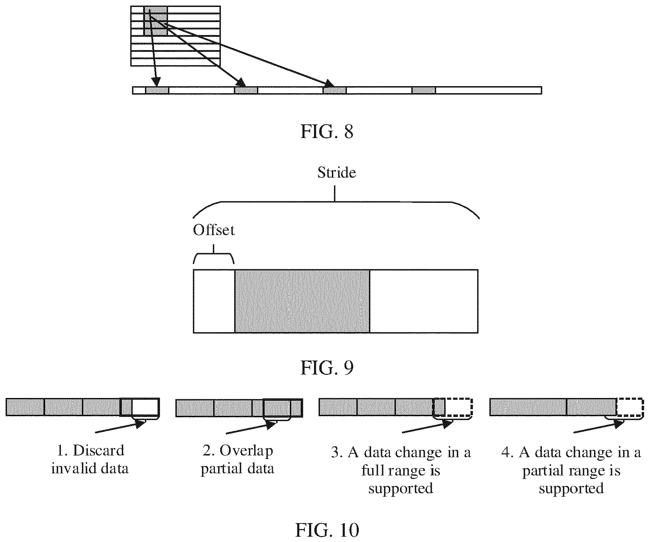

FIG. 8 is a schematic diagram of a read-skipping and write-skipping scenario used in an operator calculation process. In this application, a static calculating unit completes only calculation of data of an unchanged data shape, and a key to implementation of the static calculating unit is that data required for each calculation needs to be obtained through segmentation in the data space. The data space may be logical space that is defined by using a data shape and that is used for storing data, and an address of the data space is multi-dimensional, and is actually located in memory space. The memory space may be storage space used for storing data in a memory, and an address of the memory space is one-dimensional. As shown in FIG. 8, a gray part is data that needs to be calculated by the static calculating unit during one calculation. After the memory space is expanded, it can be learned that the gray part is discontinuous. Therefore, the data required by the static calculating unit for each calculation may be obtained from the memory space in a read-skipping and write-skipping manner, and after calculation is completed, output data obtained through calculation is stored into the memory space.

FIG. 9 is a schematic diagram of a read-skipping and write-skipping support manner. In this application, a method for supporting read skipping and write skipping is to add an interface, for example, an bind_buffer (an axis, a stride, and an offset) interface. A function of the interface is to establish a mapping relationship between a tensor (tensor) and a buffer (buffer) of a static calculating unit. As shown in FIG. 8, the tensor (tensor) corresponds to data (a gray part in FIG. 9) that needs to be processed by the static calculating unit, and a size of a buffer (buffer) is consistent with a size of data stored in data space. The axis (axis) indicates each dimension of the tensor. The offset (offset) indicates an offset of the tensor in a dimension from which data needs to be read. The stride (stride) indicates a data length that needs to be skipped by the tensor in the dimension from which the data needs to be read. It can be learned that, in this application, a plurality of dimensions are mapped, to implement read skipping and write skipping in multi-dimensional data space

FIG. 10 is a schematic diagram of a tail data processing manner. The tail data is a segment of data that is obtained through logical division by a static calculating unit in a dimension and whose data length that needs to be processed is less than a data length that is supported by the static calculating unit for processing. As shown in FIG. 10, for the tail data, there may be four processing manners:
Manner 1: Discard invalid data. To be specific, an excess part of the tail data is discarded. An advantage of manner 1 is that scalar calculation is small. A disadvantage of manner 1 is that invalid calculation is large.
Manner 2: Overlap partial data. To be specific, an excess part of the tail data is moved forward, and the partial data is overlapped. An advantage of manner 2 is that scalar calculation is small. A disadvantage of manner 2 is that repeated calculation is large. In other words, the excess part of the tail data may overlap with data that needs to be processed by the another calculating unit. To be specific, when reading data, the static calculating unit that calculates the tail data may set a start location in the data that needs to be processed by the another calculating unit. Therefore, the partial data overlaps.
Manner 3: A data change in a full range is supported. To be specific, if a data length of data in each dimension is small, a change may occur in the entire data length. For example, if the data length is 16, a change ranging from 0 to 16 can be supported.
Manner 4: A data change in a partial range is supported. To be specific, if a data length of data in each dimension is large, a data change only in a small range at the tail of the data length is supported. For example, if the data length is 100, a change ranging from 90 to 100 can be supported.

The foregoing manner 3 and manner 4 are processing manners for a change of a data shape. An advantage of the foregoing manner 3 and manner 4 is that repeated calculation is small. A disadvantage of the foregoing manner 3 and manner 4 is that scalar calculation is large.

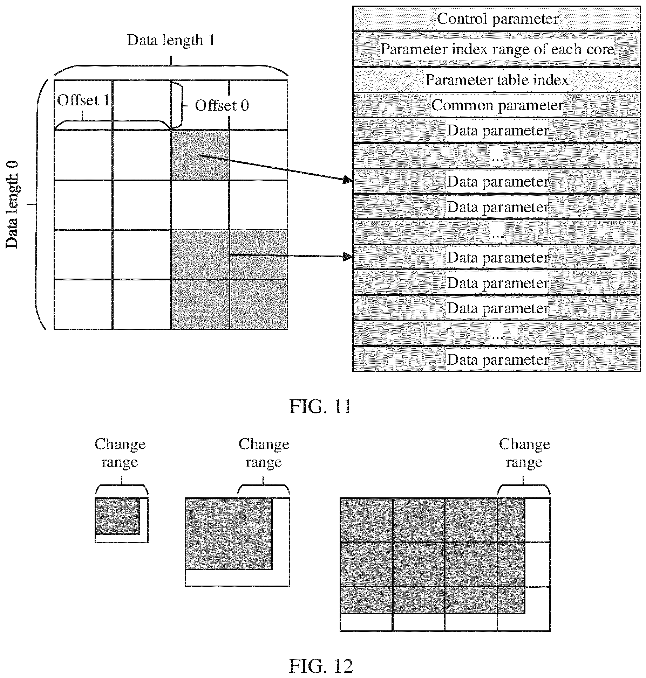

FIG. 11 is a schematic diagram of a structure of a parameter table. The parameter table is a form of parameter data used for describing a data shape that is supported by an AI network for processing. As shown in FIG. 11, a logical segmentation manner of a data shape of target data that is supported by the AI network for processing (or data shapes of different sizes are obtained through segmentation) is on the left. Each data shape obtained through logical segmentation corresponds to an invocation of a static calculating unit, and a data structure of the parameter table is on the right. The parameter table is a data structure used for describing a combination mode of static calculating units. Each entry in the table corresponds to an invocation of a static calculating unit and a location of data that needs to be calculated by the to-be-invoked static calculating unit and that is in the target data. Data parameters in the entry mainly include:
(1) an ID of a to-be-invoked static calculating unit;
(2) a data length of the target data in each dimension, for example, in FIG. 11, a data length 0 being a data length of the target data in a dimension of a width, and a data length 1 being a data length of the target data in a dimension of a length;
(3) an offset of data that needs to be calculated by the to-be-invoked static calculating unit and that is in each dimension, for example, in FIG. 11, an offset 0 being an offset of the target data in a dimension of a width, and an offset 1 being an offset of the target data in a dimension of a length; and
(4) a data length of the data that needs to be calculated by the to-be-invoked static calculating unit and that is in each dimension.

In addition, a common parameter area in the parameter table is used for storing a same parameter in each entry, for example, a data length of the target data in each dimension.

The parameter table is generated based on a combination algorithm. For example, in a two-dimensional manner, the combination algorithm is to splice rectangular blocks; in a three-dimensional manner, the combination algorithm is equivalent to splicing of cubes.

The parameter table can be a rank data table. When processing tail data, the static calculating unit may be lengthened. For example, all the three examples shown in FIG. 12 can support a data shape in a specific change range. Therefore, it is unnecessary to generate a parameter table for each data shape. If a rank parameter table is used, a quantity of parameter tables in a buffer can be effectively reduced. A change range on the left in FIG. 12 is a global change. For example, a data length in a dimension is 16, and a global change range may be 0 to 16. A change range in the middle is a partial change. For example, a data length in a dimension is 100, and a partial change range may be 90 to 100. A change range on the right is a change of only tail data.

It should be noted that a parameter table corresponding to a data shape that needs to be supported by the AI network is automatically generated, and does not need to be configured by a user. Features of the parameter table may include: (1) The parameter table is a data structure that may describe an invoking sequence of static calculating units; (2) a location of a data block calculated by each static calculating unit in original data (that is, a location of a data block having a second data shape corresponding to each static calculating unit in a data block having a first data shape) may be further described; and (3) the parameter table may describe a combination mode of static calculating unit, and control the static calculating unit to complete calculation of all data. The static calculating unit may be a binary static calculating unit. In other words, the static calculating unit may be compiled into a binary file before a version is released, and is provided to a user in a form of a binary file during release.

In addition, a change of a data shape in any range may be supported by combining binary static calculating units. Features of this manner may include: (1) Only a block of data can be calculated in an invocation; (2) it is supported that a block of data is extracted from original data space in a read-skipping manner, and the data is written to a corresponding location in output data space in a write-skipping manner after calculation; and (3) data-driven calculation is supported, which static calculating unit is invoked and which data block is calculated are included, and the data can be imported as a parameter table.

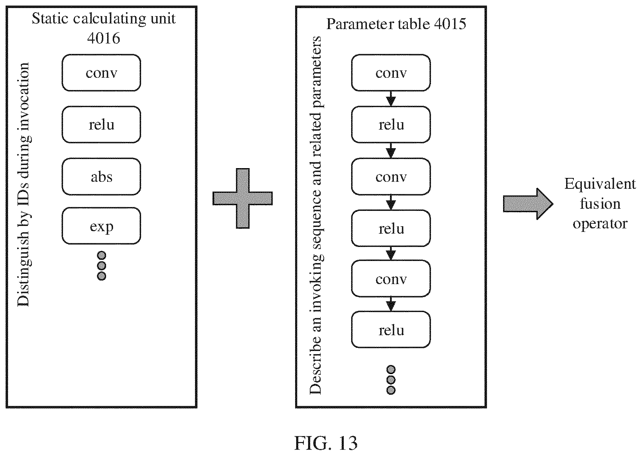

FIG. 13 is a schematic diagram of a fusion operator. The fusion operator refers to different types of operators that are cascaded and are fused into one operator for one-time calculation. A static calculating unit 4016 may include static calculating units of different types of operators, and the static calculating units are distinguished by IDs during invocation. Then, a parameter table 4015 is used for describing an invoking sequence and related parameters of static calculating units of different types of operators. In this way, calculation of the fusion operator can be completed. As shown in FIG. 13, the static calculating unit 4016 includes a static calculating unit of a conv operator, a static calculating unit of a relu operator, a static calculating unit of an abs operator, a static calculating unit of an exp operator, and the like, which are distinguished by IDs during invocation. The parameter table 4015 is used for describing an invoking sequence and related parameters of the static calculating unit of the conv operator, the static calculating unit of the relu operator, the static calculating unit of the abs operator, the static calculating unit of the exp operator, and the like. The related parameter may include a size of a second data shape that is supported by each static calculating unit for processing, and may further include location information of data of the second data shape that is supported by each static calculating unit for processing and that is in data having a first data shape.

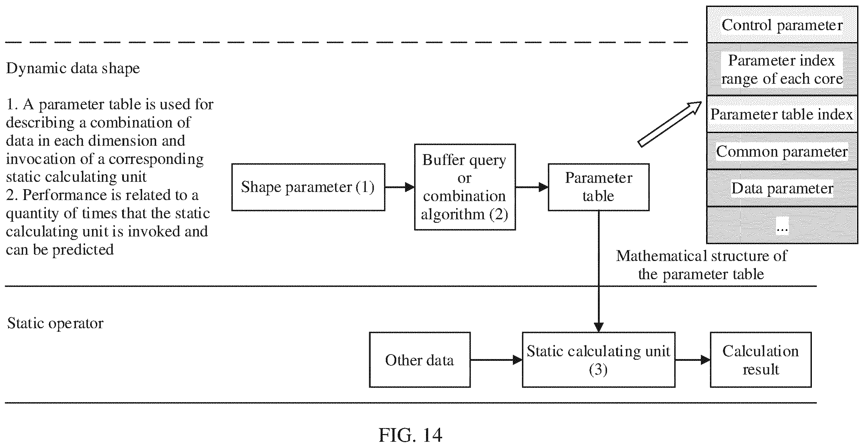

FIG. 14 is a schematic diagram of an operator calculation process. When an operator is invoked in an execution state of an AI network, as shown in FIG. 14, a parameter table is used as an input parameter of a static calculating unit, and the operator sequentially invokes the static calculating unit based on content of the parameter table to complete operator calculation.

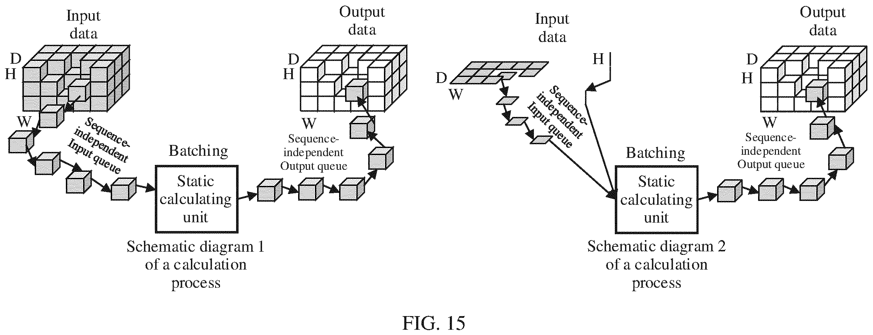

FIG. 15 is a schematic diagram of an operator calculation process. As shown in FIG. 15, a schematic diagram 1 of a calculation process on the left is an operator calculation process in a three-dimensional single-input scenario, and a schematic diagram 2 of a calculation process on the right is two operator inputs, one piece of two-dimensional input data, and one piece of one-dimensional input data.

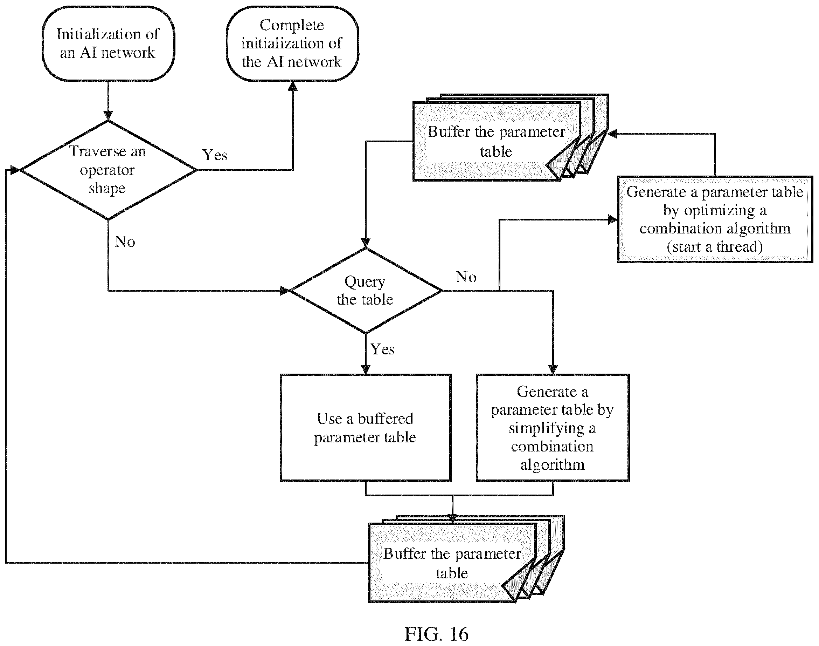

FIG. 16 is a schematic diagram of an operator calculation process. As shown in FIG. 16, when a data shape that needs to be supported by each AI operator is traversed, whether a supported parameter table exists in a buffer is first queried. If the supported parameter table exists, the parameter table in the buffer is used. If the supported parameter table does not exist, a simplified combination algorithm is used to generate a parameter table and the parameter table is stored in the buffer. At the same time, a thread is started to invoke an optimized combination algorithm to generate a parameter table and the buffer is updated. In this way, when the AI network is started for the first time, the network can be initialized as quickly as possible, and the optimized parameter table can be used when the AI network is started later. This improves user experience. The simplified combination algorithm means that only the same static calculating units are used, and time for the combination algorithm is the shortest. The optimized combination algorithm means that different static calculating units are used for optimal combination, and time for the combination algorithm is long.

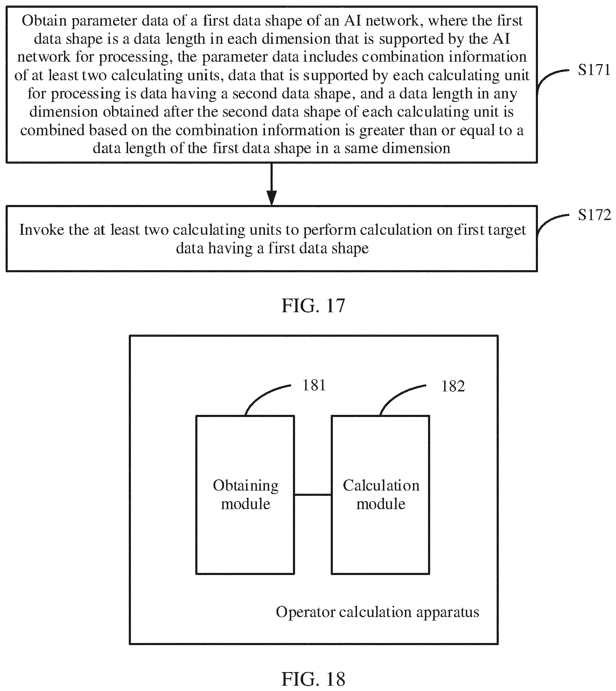

Next, FIG. 17 is a schematic flowchart of an operator calculation method according to an embodiment of this application. The operator calculation method may be used in an AI network. As shown in FIG. 17, the operator calculation method may include the following steps.

S171: Obtain parameter data of a first data shape of the AI network, where the first data shape is a data length in each dimension that is supported by the AI network for processing, the parameter data includes combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension.

In some embodiments, the at least two calculating units in the parameter data may include same calculating units, or different calculating units, or same calculating units and different calculating units. Second data shapes of the same calculating units have a same data length in each dimension, and second data shapes of the different calculating units have different data lengths in at least one dimension.

The at least two calculating units in the parameter data each may be a calculating unit of the AI network.

The combination information of the at least two calculating units in the parameter data may include a combination mode. In this way, a data length in any dimension obtained after the second data shape of each calculating unit is combined based on the combination mode is greater than or equal to a data length of the first data shape in a same dimension.

The parameter data may further include identification information for a specified calculating unit. The specified calculating unit is a calculating unit, in the at least two calculating units, whose data that needs to be processed is data having a third data shape. A data length of the third data shape in at least one dimension is less than a data length of the second data shape that is supported by the specified calculating unit for processing and that is in the same dimension. For example, the data in the third data shape may be tail data in FIG. 10.

The parameter data may further include a specified processing manner of the specified calculating unit for the data having the third data shape. The specified processing manner may include: discarding invalid data, where the invalid data is data other than the data having the third data shape in the second data shape that is supported by the specified calculating unit for processing; and performing data overlapping, where the performing data overlapping is overlapping the invalid data with data that needs to be processed by another calculating unit. For example, discarding invalid data may be manner 1 in FIG. 10, and performing data overlapping may be manner 2 in FIG. 10.

The parameter data may further include a specified change range of the third data shape in each dimension that is supported by the specified calculating unit. The specified change range may be a data length of the second data shape that is supported by the specified calculating unit for processing and that is in each dimension, or a specified part length of the data length of the second data shape in each dimension. For example, the specified change range may be manner 3 and manner 4 in FIG. 10.

The parameter data includes rank parameter data, and the rank parameter data is used for supporting a data shape in a specified change range. For example, all the three examples shown in FIG. 12 can support a data shape in a specific change range. Therefore, it is unnecessary to generate a parameter table for each data shape. If a rank parameter table is used, a quantity of parameter tables in a buffer can be effectively reduced.

The at least two calculating units in the parameter data may belong to different types of operators. In this way, the calculating units of these different types of operators in the parameter data may be invoked to complete calculation of a fusion operator, to avoid invoking an operator of another type for calculation after an operator of one type completes calculation, and improve calculation efficiency of the fusion operator. For example, as shown in FIG. 13, the static calculating unit 4016 includes a static calculating unit of a conv operator, a static calculating unit of a relu operator, a static calculating unit of an abs operator, a static calculating unit of an exp operator, and the like, which are distinguished by IDs during invocation. The parameter table 4015 is used for describing an invoking sequence and related parameters of the static calculating unit of the conv operator, the static calculating unit of the relu operator, the static calculating unit of the abs operator, the static calculating unit of the exp operator, and the like.

S172: Invoke the at least two calculating units to perform calculation on first target data having a first data shape.

In some embodiments, the at least two calculating units may be obtained from a calculating unit operator library, and calculation on the first target data having the first data shape is performed by using the at least two calculating units. For example, as shown in FIG. 5, the execution host 4001 may import the static calculating unit binary package 4020 released by the compilation host 4002. In this way, the at least two calculating units may be obtained from the static calculating unit binary package 4020, and calculation on the first target data having the first data shape is performed by using the at least two calculating units.

For any calculating unit, a target location, in the first target data, of second target data that needs to be processed by the any calculating unit may be determined; the second target data that needs to be processed by the any calculating unit is obtained based on the target location and from memory space storing the first target data; and calculation on the second target data is performed by using the any calculating unit. For example, as shown in FIG. 11, the logical segmentation manner of the data shape of the target data that is supported by the AI network for processing (or data shapes of different sizes are obtained through segmentation) is on the left. Each data shape obtained through logical segmentation corresponds to an invocation of a static calculating unit, and the data structure of the parameter table is on the right. The parameter table is a data structure used for describing a combination mode of static calculating units. Each entry in the table corresponds to an invocation of a static calculating unit and a location of data that needs to be calculated by the to-be-invoked static calculating unit and that is in the target data. In this way, the data that needs to be calculated may be obtained based on the location of the data that needs to be calculated by the to-be-invoked static calculating unit and that is in the target data, and the to-be-invoked static calculating unit is invoked to calculate the data that needs to be calculated.

Therefore, according to the foregoing solution, a change of a data shape in any range can be supported. This implements a function of an AI dynamic-shape operator, and improves a startup speed of the AI network.

Based on the method in the foregoing embodiments, an embodiment of this application further provides an operator calculation apparatus. The operator calculation apparatus is used in an AI network. FIG. 18 is a schematic diagram of a structure of an operator calculation apparatus according to an embodiment of this application. As shown in FIG. 18, the operator calculation apparatus includes:
an obtaining module 181, configured to obtain parameter data of a first data shape of an AI network, where the first data shape is a data length in each dimension that is supported by the AI network for processing, the parameter data includes combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension; and
a calculation module 182, configured to invoke the at least two calculating units to perform calculation on first target data having the first data shape.

In a possible implementation, the at least two calculating units include same calculating units, or different calculating units, or same calculating units and different calculating units.

Second data shapes of the same calculating units have a same data length in each dimension, and second data shapes of the different calculating units have different data lengths in at least one dimension.

In a possible implementation, the at least two calculating units each are a calculating unit of the AI network.

In a possible implementation, the combination information includes a combination mode of the at least two calculating units.

A data length in any dimension obtained after the second data shape of each calculating unit is combined based on the combination mode is greater than or equal to a data length of the first data shape in a same dimension.

In a possible implementation, the parameter data further includes identification information for a specified calculating unit.

The specified calculating unit is a calculating unit, in the at least two calculating units, whose data that needs to be processed is data having a third data shape. A data length of the third data shape in at least one dimension is less than a data length of the second data shape that is supported by the specified calculating unit for processing and that is in the same dimension.

In a possible implementation, the parameter data further includes a specified processing manner of the specified calculating unit for the data having the third data shape.

In a possible implementation, the specified processing manner includes:
discarding invalid data, where the invalid data is data other than the data having the third data shape in the second data shape that is supported by the specified calculating unit for processing; and
performing data overlapping, where the performing data overlapping is overlapping the invalid data with data that needs to be processed by another calculating unit.

In a possible implementation, the parameter data further includes a specified change range of the third data shape in each dimension that is supported by the specified calculating unit.

In a possible implementation, the specified change range is a data length of the second data shape that is supported by the specified calculating unit for processing and that is in each dimension, or a specified part length of the data length of the second data shape in each dimension.

In a possible implementation, the parameter data includes rank parameter data, and the rank parameter data is used for supporting a data shape in a specified change range.

In a possible implementation, the calculation module 182 includes:
a first obtaining submodule, configured to obtain the at least two calculating units from a calculating unit operator library; and
a first calculation submodule, configured to perform, by using the at least two calculating units, calculation on the first target data having the first data shape.

In a possible implementation, the calculation module 182 includes:
a determining submodule, configured to determine, for any calculating unit, a target location, in the first target data, of second target data that needs to be processed by the any calculating unit;
a second obtaining submodule, configured to obtain, based on the target location, the second target data that needs to be processed by the any calculating unit from memory space storing the first target data; and
a second calculation submodule, configured to perform calculation on the second target data by using the any calculating unit.

In a possible implementation, the target location includes: each dimension in which the second target data is located; and an offset and a data length of the second target data in any dimension.

In a possible implementation, the at least two calculating units belong to different types of operators.

In a possible implementation, the calculating unit is a precompiled operator.

It should be understood that the foregoing apparatus is configured to perform the method in the foregoing embodiments. An implementation principle and technical effect of a corresponding program module in the apparatus are similar to those described in the foregoing method. For a working process of the apparatus, refer to a corresponding process in the foregoing method. Details are not described herein again.

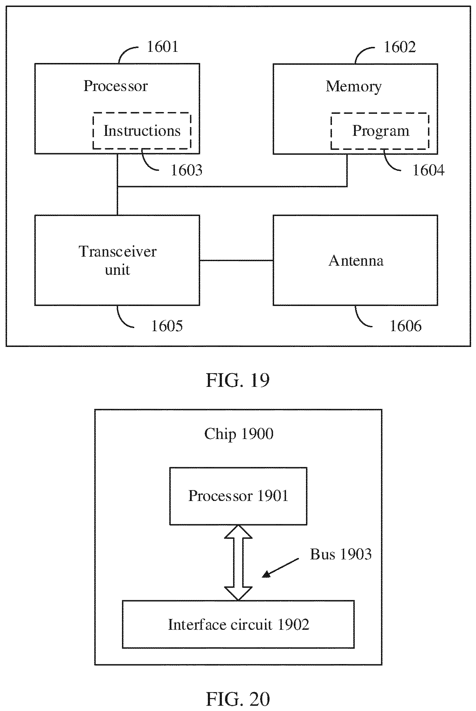

Based on the method in the foregoing embodiments, an embodiment of this application further provides an operator calculation apparatus. FIG. 19 is a schematic diagram of a structure of an operator calculation apparatus according to an embodiment of this application. As shown in FIG. 19, an embodiment of this application provides an operator calculation apparatus. The operator calculation apparatus may be configured to implement the method described in the foregoing method embodiments.

The operator calculation apparatus includes at least one processor 1601, and the at least one processor 1601 may support the operator calculation apparatus in implementing the control method provided in embodiments of this application.

The processor 1601 may be a general-purpose processor or a dedicated processor. For example, the processor 1601 may include a central processing unit (central processing unit, CPU) and/or a baseband processor. The baseband processor may be configured to process communication data (for example, determine a target screen terminal), and the CPU may be configured to implement corresponding control and processing functions, execute a software program, and process data of the software program.

Further, the operator calculation apparatus may further include a transceiver unit 1605, configured to input (receive) and output (send) a signal. For example, the transceiver unit 1605 may include a transceiver or a radio frequency chip. The transceiver unit 1605 may further include a communication interface.

Optionally, the operator calculation apparatus may further include an antenna 1606, and may be configured to support the transceiver unit 1605 in implementing a sending function and a receiving function of the operator calculation apparatus.

Optionally, the operator calculation apparatus may include one or more memories 1602 that store a program (which may alternatively be instructions or code) 1604. The program 1604 may be run by the processor 1601, so that the processor 1601 performs the method described in the foregoing method embodiments. Optionally, the memory 1602 may further store data. Optionally, the processor 1601 may further read data (for example, prestored first feature information) stored in the memory 1602. The data and the program 1604 may be stored at a same storage address, or the data and the program 1604 may be stored at different storage addresses.

The processor 1601 and the memory 1602 may be disposed separately, or may be integrated together, for example, integrated on a board or integrated into a system on chip (system on chip, SOC).

For detailed descriptions of operations performed by the operator calculation apparatus in the foregoing possible designs, refer to the descriptions in the embodiment of the operator calculation method provided in embodiments of this application. Details are not described herein again.

Based on the apparatus in the foregoing embodiments, an embodiment of this application further provides an operator calculation device. The operator calculation device includes any operator calculation apparatus provided in the foregoing embodiments.

It may be understood that, in this embodiment of this application, the operator calculation device may be a terminal device such as a mobile phone, a tablet computer, a digital camera, a personal digital assistant (personal digital assistant, PDA), a wearable device, a smart television, or a Huawei smart screen. An example embodiment of the terminal device includes but is not limited to a terminal device using iOS, Android, Windows, Harmony OS (Harmony OS), or another operating system. The terminal device may alternatively be another terminal device, such as a laptop (laptop) computer having a touch-sensitive surface (for example, a touch panel). A type of the terminal device is not specifically limited in this embodiment of this application. A diagram of a structure of components of the terminal device is shown in FIG. 6.

Based on the operator calculation device in the foregoing embodiments, an embodiment of this application further provides an operator calculation system, an operator calculation device, and an operator compilation device. The operator calculation device includes any operator calculation apparatus provided in the foregoing embodiments. The operator compilation device is configured to compile a releasable static calculating unit binary package. The operator calculation device is configured to import the static calculating unit binary package. For example, the operator calculation device may be the execution host 4001 in FIG. 5 or the terminal device in FIG. 6, and the operator compilation device may be the compilation host 4002 in FIG. 5.

Based on the method in the foregoing embodiment, an embodiment of this application further provides a chip. FIG. 20 is a schematic diagram of a structure of a chip according to an embodiment of this application. As shown in FIG. 20, a chip 1900 includes one or more processors 1901 and an interface circuit 1902. Optionally, the chip 1900 may further include a bus 1903.

The processor 1901 may be an integrated circuit chip, and has a signal processing capability. In an implementation process, steps in the foregoing methods can be implemented by using a hardware integrated logical circuit in the processor 1901, or by using instructions in a form of software. The processor 1901 may be a general-purpose processor, a digital communicator (DSP), an application-specific integrated circuit (ASIC), a field programmable gate array (FPGA) or another programmable logic device, a discrete gate or transistor logic device, or a discrete hardware component. The processor 1901 may implement or perform the methods and steps that are disclosed in embodiments of this application. The general-purpose processor may be a microprocessor, or the processor may be any conventional processor or the like.

The interface circuit 1902 may be configured to send or receive data, instructions, or information. The processor 1901 may process the data, the instructions, or other information received through the interface circuit 1902, and send processed information through the interface circuit 1902.

Optionally, the chip further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the interface circuit 1902 may be configured to output an execution result of the processor 1901.

It should be noted that functions corresponding to each of the processor 1901 and the interface circuit 1902 may be implemented by using a hardware design, may be implemented by using a software design, or may be implemented by using a combination of software and hardware. This is not limited herein.

It should be understood that steps in the foregoing method embodiments may be implemented by using a logic circuit in a form of hardware, or by using instructions in a form of software in the processor.

It may be understood that, the processor in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or any other programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It may be understood that various numbers in embodiments of this application are merely used for differentiation for ease of description, and are not used to limit the scope of embodiments of this application.

## Claims

1. An operator calculation method, wherein the method comprises:
obtaining parameter data of a first data shape of an artificial intelligence AI network, wherein the first data shape is a data length in each dimension that is supported by the AI network for processing, the parameter data comprises combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension; and
invoking the at least two calculating units to perform calculation on first target data having the first data shape.

2. The method according to claim 1, wherein the at least two calculating units comprise same calculating units, or different calculating units, or same calculating units and different calculating units; and
second data shapes of the same calculating units have a same data length in each dimension, and second data shapes of the different calculating units have different data lengths in at least one dimension.

3. The method according to claim 1, wherein the at least two calculating units each are a calculating unit of the AI network.

4. The method according to claim 1, wherein the combination information comprises a combination mode of the at least two calculating units; and
a data length in any dimension obtained after the second data shape of each calculating unit is combined based on the combination mode is greater than or equal to a data length of the first data shape in a same dimension.

5. The method according to claim 1, wherein the parameter data further comprises identification information for a specified calculating unit; and
the specified calculating unit is a calculating unit, in the at least two calculating units, whose data that needs to be processed is data having a third data shape, and a data length of the third data shape in at least one dimension is less than a data length of the second data shape that is supported by the specified calculating unit for processing and that is in the same dimension.

6. The method according to claim 5, wherein the parameter data further comprises a specified processing manner of the specified calculating unit for the data having the third data shape.

7. The method according to claim 6, wherein the specified processing manner comprises:
discarding invalid data, wherein the invalid data is data other than the data having the third data shape in the second data shape that is supported by the specified calculating unit for processing; and
performing data overlapping, wherein the performing data overlapping is overlapping the invalid data with data that needs to be processed by another calculating unit.

8. The method according to claim 5, wherein the parameter data further comprises a specified change range of the third data shape in each dimension that is supported by the specified calculating unit.

9. The method according to claim 8, wherein the specified change range is a data length of the second data shape that is supported by the specified calculating unit for processing and that is in each dimension, or a specified part length of the data length of the second data shape in each dimension.

10. The method according to claim 1, wherein the parameter data comprises rank parameter data, and the rank parameter data is used for supporting a data shape in a specified change range.

11. The method according to claim 1, wherein the invoking the at least two calculating units to perform calculation on first target data having the first data shape comprises:
obtaining the at least two calculating units from a calculating unit operator library; and
performing, by using the at least two calculating units, calculation on the first target data having the first data shape.

12. The method according to claim 1, wherein the invoking the at least two calculating units to perform calculation on first target data having the first data shape comprises:
for any calculating unit, determining a target location, in the first target data, of second target data that needs to be processed by the any calculating unit;
obtaining, based on the target location, the second target data that needs to be processed by the any calculating unit from memory space storing the first target data; and
performing calculation on the second target data by using the any calculating unit.

13. The method according to claim 12, wherein the target location comprises: each dimension in which the second target data is located; and an offset and a data length of the second target data in any dimension.

14. The method according to claim 1, wherein the at least two calculating units belong to different types of operators.

15. The method according to any one of claims 1 to 14, wherein the calculating unit is a precompiled operator.

16. An operator calculation apparatus, wherein the apparatus comprises:
an obtaining module, configured to obtain parameter data of a first data shape of an artificial intelligence AI network, wherein the first data shape is a data length in each dimension that is supported by the AI network for processing, the parameter data comprises combination information of at least two calculating units, data that is supported by each calculating unit for processing is data having a second data shape, and a data length in any dimension obtained after the second data shape of each calculating unit is combined based on the combination information is greater than or equal to a data length of the first data shape in a same dimension; and
a calculation module, configured to invoke the at least two calculating units to perform calculation on first target data having the first data shape.

17. The apparatus according to claim 16, wherein the at least two calculating units comprise same calculating units, or different calculating units, or same calculating units and different calculating units; and
second data shapes of the same calculating units have a same data length in each dimension, and second data shapes of the different calculating units have different data lengths in at least one dimension.

18. The apparatus according to claim 16, wherein the at least two calculating units each are a calculating unit of the AI network.

19. The apparatus according to claim 16, wherein the combination information comprises a combination mode of the at least two calculating units; and
a data length in any dimension obtained after the second data shape of each calculating unit is combined based on the combination mode is greater than or equal to a data length of the first data shape in a same dimension.

20. The apparatus according to claim 16, wherein the parameter data further comprises identification information for a specified calculating unit; and
the specified calculating unit is a calculating unit, in the at least two calculating units, whose data that needs to be processed is data having a third data shape, and a data length of the third data shape in at least one dimension is less than a data length of the second data shape that is supported by the specified calculating unit for processing and that is in the same dimension.

21. The apparatus according to claim 20, wherein the parameter data further comprises a specified processing manner of the specified calculating unit for the data having the third data shape.

22. The apparatus according to claim 21, wherein the specified processing manner comprises:
discarding invalid data, wherein the invalid data is data other than the data having the third data shape in the second data shape that is supported by the specified calculating unit for processing; and
performing data overlapping data, wherein the performing data overlapping is overlapping the invalid data with data that needs to be processed by another calculating unit.

23. The apparatus according to claim 20, wherein the parameter data further comprises a specified change range of the third data shape in each dimension that is supported by the specified calculating unit.

24. The apparatus according to claim 23, wherein the specified change range is a data length of the second data shape that is supported by the specified calculating unit for processing and that is in each dimension, or a specified part length of the data length of the second data shape in each dimension.

25. The apparatus according to claim 16, wherein the parameter data comprises rank parameter data, and the rank parameter data is used for supporting a data shape in a specified change range.

26. The apparatus according to claim 16, wherein the calculation module comprises:
a first obtaining submodule, configured to obtain the at least two calculating units from a calculating unit operator library; and
a first calculation submodule, configured to perform, by using the at least two calculating units, calculation on the first target data having the first data shape.

27. The apparatus according to claim 16, wherein the calculation module comprises:
a determining submodule, configured to determine, for any calculating unit, a target location, in the first target data, of second target data that needs to be processed by the any calculating unit;
a second obtaining submodule, configured to obtain, based on the target location, the second target data that needs to be processed by the any calculating unit from memory space storing the first target data; and
a second calculation submodule, configured to perform calculation on the second target data by using the any calculating unit.

28. The apparatus according to claim 27, wherein the target location comprises: each dimension in which the second target data is located; and an offset and a data length of the second target data in any dimension.

29. The apparatus according to claim 16, wherein the at least two calculating units belong to different types of operators.

30. The apparatus according to any one of claims 16 to 29, wherein the calculating unit is a precompiled operator.

31. An operator calculation apparatus, comprising:
at least one memory, configured to store a program; and
at least one processor, configured to execute the program stored in the memory, wherein when the program stored in the memory is executed, the processor is configured to perform the method according to any one of claims 1 to 15.

32. An operator calculation device, comprising the apparatus according to any one of claims 16 to 30.

33. An operator calculation system, comprising an operator calculation device and an operator compilation device, wherein
the operator calculation device comprises the apparatus according to any one of claims 16 to 30;
the operator compilation device is configured to compile a releasable calculating unit package; and
the operator calculation device is configured to import the calculating unit package.

34. A computer storage medium, wherein the computer storage medium stores instructions, and when the instructions are run on a computer, the computer is enabled to perform the method according to any one of claims 1 to 15.

35. A computer program product, comprising instructions, wherein when the instructions are run on a computer, the computer is enabled to perform the method according to any one of claims 1 to 15.

36. A chip, comprising at least one processor and an interface, wherein
the interface is configured to provide program instructions or data for the at least one processor; and
the at least one processor is configured to execute the program instructions, to implement the method according to any one of claims 1 to 15.
